# EUROPÄISCHE PATENTSCHRIFT

(11) **EP 0 519 316 B1**
(45) Veröffentlichungstag und Bekanntmachung des Hinweises auf die Patenterteilung: **17.05.1995**
(21) Anmeldenummer: 92109804.2
(22) Anmeldetag: 11.06.1992
(51) Int. Cl.: A47B 57/42, B65G 1/02

(54) **Kragarmregal**
Cantilever shelf
Rayonnage à consoles

(30) Priorität: 18.06.1991 DE 9107454 U
(43) Veröffentlichungstag der Anmeldung: 23.12.1992
(73) Patentinhaber: Hölscher, Ottokar, Dipl.-Ing., D-50858 Köln (DE)
(72) Erfinder: Hölscher, Ottokar, Dipl.-Ing., D-50858 Köln (DE)
(74) Vertreter: Mey, Klaus-Peter, Dr.-Ing. Dipl.-Wirtsch.-Ing.

(56) Entgegenhaltungen:
- EP-A- 0 361 291
- EP-A- 0 427 167
- DE-B- 1 289 271
- DE-U- 9 000 089

## Beschreibung

Die Erfindung betrifft ein Kragarmregal gemäß dem Oberbegriff des Anspruchs 1.

Aus der Offenlegungsschrift DE-A1- 38 32 537 ist ein gattungsgleiches Kragarmregal bekannt, bei dem in Ausstanzungen von T-Profilständern Kragarme mit Fußplatten und Haken in einfacher Weise horizontal einbringbar und mittels Sicherungselementen arretierbar sind. Das Ein- und Aushängen der Kragarme wird hierdurch erheblich erleichtert.

Mit dieser bekannten Ausführung wurde bereits gegenüber früherem Stand der Technik, beispielsweise entsprechend der europäischen Patentschrift EP-C- 0 061 514, ein wesentlicher Fortschritt erzielt, denn bei der hieraus bekannten älteren Ausführung konnte das Ein- bzw. Aushängen der Kragarme immer nur unter einem bestimmten Winkel zu den T-Profilständern erfolgen und war entsprechend schwierig zu handhaben.

Obwohl Kragarmregale nach der vorgenannten DE-A1- 38 32 537 infolge ihrer günstigen Montagebedingungen bei den meisten Anwendungsfällen gute Resultate gezeigt haben, besteht ein wachsender Bedarf nach Kragarmregalen mit besonders hohen Ansprüchen an Belastbarkeit und Sicherheit. Mehr und mehr gehen Industriebetriebe aus Gründen der Platzersparnis und kürzerer innerbetrieblicher Transportwege zur Anlage von Hochregallagern über, die dann höchsten sicherheitstechnischen Anforderungen zur Beladung mit schweren Lasten zu entsprechen haben.

Der Erfindung liegt daher die Aufgabe zugrunde, das bekannte Kragarmregal weiter zu verbessern und bei äußerster Verringerung des Aufwandes für dessen Montage eine Ausführung anzugeben, die erhöhten sicherheitstechnischen Anforderungen entspricht und sehr flexibel im Layout bei erforderlichen Umrüstungen oder Aufstellungsvarianten ist.

Diese Aufgabe wird bei einem Kragarmregal der eingangs genannten Art mit der Erfindung dadurch gelöst, daß jeder Haken einen teilweise nach unten verdickten Hals aufweist, dessen Unterseite eine Auflagefläche in einem Teilbereich der Unterkante der Ausstanzung bildet.

Mit Vorteil wird mit dieser verbesserten Ausgestaltung des Kragarmregales erreicht, daß bei waagerechter Einbringung des Armes in die Lochungen des Kragarmständers der Haken angehoben und somit die Sicherheitsposition der Hakennase gegenüber dem Arretierungselement wesentlich verbessert wird. Denn dabei wird eine bei der älteren Ausführung nach der DE-A1- 38 32 537 noch vorhandene Abscherwirkung des Hakens gegenüber dem Sicherungselement vermieden. Weiterhin ergibt die Anordnung eine wesentliche Vergrößerung der tragenden Querschnitte und damit eine Versteifung gegenüber der Anordnung an der Fußplatte und somit insgesamt eine Stabilisierung des Kragarmsystems gegen Verformung durch vertikale Kräfte und/oder Biegekräfte.

In vorteilhafter Ausgestaltung der Erfindung ist vorgesehen, daß die Auflagefläche in einer keilförmigen Abschrägung zum horizontalen und verjüngter Mittelteil des Hakens endet. Auf diese Weise wird mit der Ausbildung des Keils bzw. einer auch gerundeten Anschrägung eine besonders einfache Montage erreicht, wobei wiederum der Kragarm beim Einhängen und Hochsetzen schon vor Sicherung durch das Arretierelement, wenn auch im unbelasteten Zustand, eine feste Position hat. Durch die Keilform werden einerseits die Krallenhälse wesentlich stabilisiert. Und andererseits werden durch das automatische Anheben der Kralle beim Einführen des Armes die aufzunehmenden Kräfte im wesentlichen ohne Umlenkungen und damit unmittelbar vom Kragarm auf die Ständerflansche übertragen.

In vorteilhafter Ausgestaltung der Erfindung ist der Kragarm mit seiner Oberseite etwa in Höhe der Oberseite des Krallen-Halses an der Fußplatte angeordnet. Dadurch werden die mit der Lastaufnahme verursachten Momente verringert und somit Belastbarkeit und Sicherheit des Kragarmes signifikant erhöht.

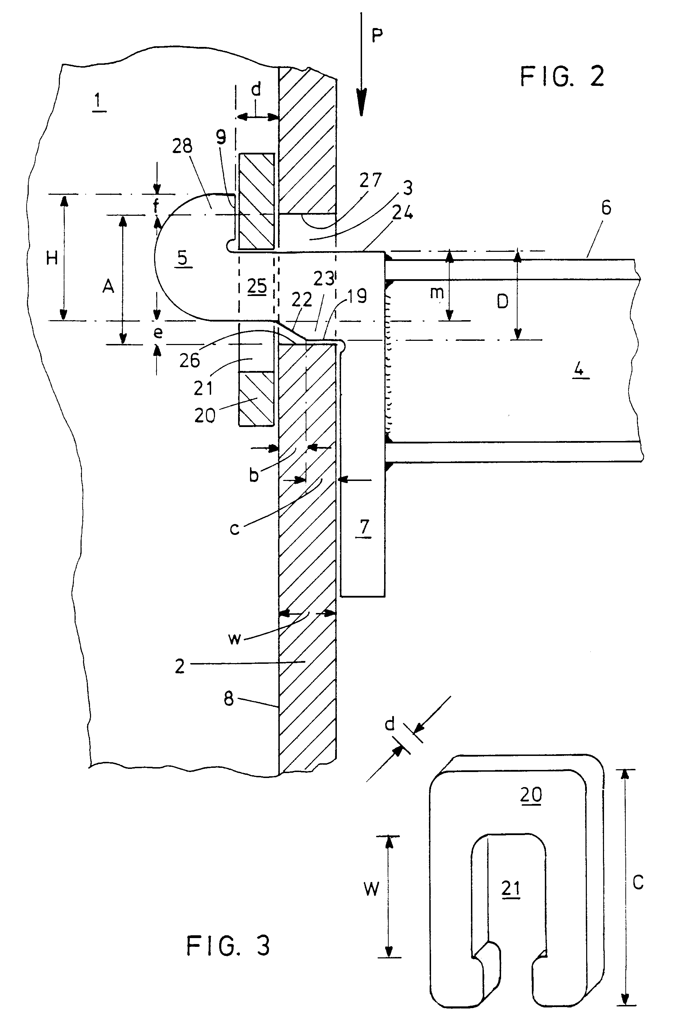

Nach einer weiteren vorteilhaften Ausführungsform ist vorgesehen, daß die Dicke (D) des Halses im Bereich der Auflagefläche um das Maß (e) größer ist, als die Dicke (m) vom horizontalen Mittelteil des Hakens. Hierdurch bildet die Kralle, wie insbesondere aus der Figur 2 ersichtlich, ein Formteil mit wesentlich erhöhtem Widerstandsmoment gegen Biegung, das auch bei vergleichsweise extrem hohen Belastungen keine schädlichen Deformierungen erleidet.

Mit großem Vorteil wird mit der neuen Ausführung weiter erreicht, daß die Nase des Hakens um das Maß (f) im eingebauten Zustand die Oberkante der Ausstanzung des Flansches überragt. Dadurch wird vermieden, daß die Nase des Hakens bei Krafteinwirkung das Arretierelement auf Abscherung beansprucht. Damit wird die Sicherheit des Systems weiter erhöht.

Um einen guten Sitz des Kragarmes am Profilständer mit einem Minimum an Montageaufwand beim Einsetzen des Kragarmes zu erreichen, ist mit einer weiteren Ausgestaltung vorgesehen, daß der schräg ansteigende Teil des Keiles in horizontaler Richtung eine Länge besitzt, die etwa der halben Dicke des Flansches entspricht und gleich bzw. um eine Passungstoleranz, vorzugsweise zwischen 0,1 und 0,5 mm kleiner als der Abstand der Hakeninnenseite von der Flanschinnenseite ist. Durch die vom Keil gebildete schräg ansteigende Rampenform wird beim Einsetzen des Kragarmes eine automatische Führung unter Anhebung des Systems bewirkt, wobei der Haken problemlos in horizontaler Lage eingeführt werden kann, obwohl der Abstand zwischen dessen Lastauflagefläche und der Oberseite der Nase größer ist, als die Höhe der Ausstanzung im Flansch des T-Profilständers.

Weiter ist vorgesehen, daß die Auflagefläche des Halses eine horizontale Länge aufweist, die etwa der halben Dicke des Flansches entspricht. Damit ergibt sich zwischen Fußplatte und Auflagefläche eine äußerst kurze horizontale Distanz, durch welche die Größe der beim Belasten des Kragarmes entstehenden Momente vorteilhaft in Grenzen gehalten wird.

Weiterhin werden günstige Montagebedingungen und ein Höchstmaß an Sicherheit dadurch erreicht, daß das Höhenmaß (H) des Hakens, gemessen zwischen Mittelteil und Nase, um eine Passungstoleranz, vorzugsweise 0,1 bis 0,5 mm kleiner ist als der Abstand zwischen Unterkante und Oberkante der Ausstanzungen des Flansches.

Ferner ist auch vorgesehen, daß die Dicke (d) des Sicherungselementes etwa dem horizontalen Längenmaß (c) der Auflagefläche entspricht und dessen Ausnehmung ein Höhenmaß (W) aufweist, das dem Höhenmaß des Hakens (H) plus einer Passungstoleranz von vorzugsweise 0,1 bis 0,5 mm entspricht. Damit ergibt sich ein besonders guter Sitz und fester Halt des Kragarmes am Profilständer.

Weitere Einzelheiten und Vorteile der Erfindung ergeben ich aus der nachstehenden Erläuterung eines in den Zeichnungen schematisch dargestellten Ausführungsbeispieles.

Es zeigen:
- Fig. 1: eine perspektivische Ansicht eines Kragarmregals,
- Fig. 2: eine schematische Seitenansicht der Verbindung eines Kragarmes mit einem Ständer, teilweise im Schnitt,
- Fig. 3: eine perspektivische Darstellung eines Sicherungselementes.

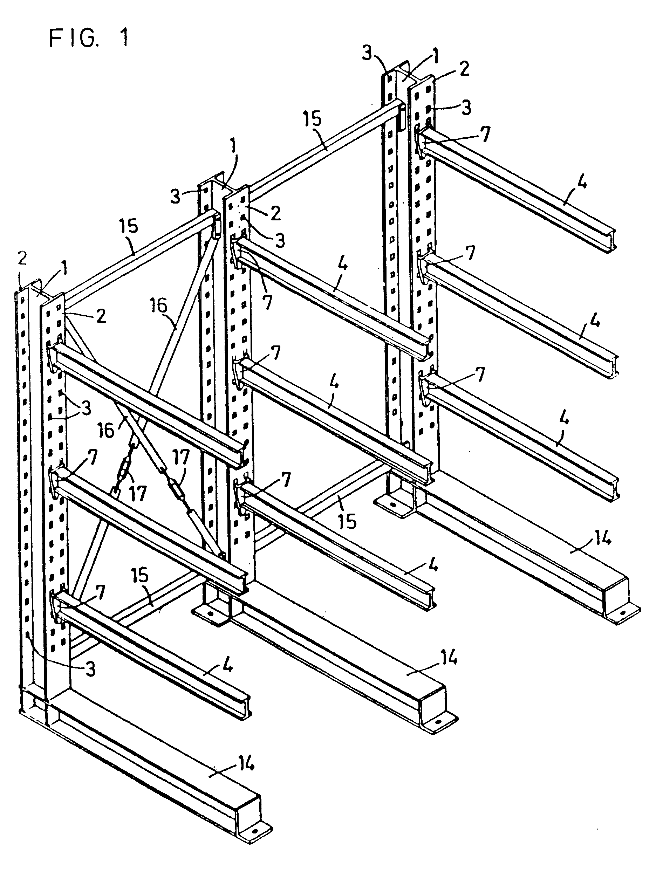

Das erfindungsgemäße Kragarmregal weist mehrere T-Profilständer (1) auf, zumindest zwei Ständer für ein Regal. Die Anzahl der Ständer ist beliebig. T-Profilständer (1) können in gleichen oder ungleichen Abständen angeordnet sein. Beim dargestellten Ausführungsbeispiel gemäß Fig. 1 sind diese T-Profilständer (1) als Doppel-T-Profilständer ausgebildet. In den Flanschen (2) der Profilständer (1) sind Paare von Öffnungen bzw. Ausstanzungen (3) angeordnet. Die Ausstanzungen (3) eines jeden Paares liegen in gleicher Höhe und sind im Abstand voneinander und übereinander in den Flanschen (2) angeordnet. Diese Ausstanzungspaare (3) können in einem Flansch (2) oder in beiden Flanschen eines Doppel-T-Trägers (1) vorhanden sein. Die Ausstanzungen (3) können beliebige Form haben, beispielsweise vierkant, rund, oder oval sein. Am unteren Ende der Ständer (1) sind Stützfüße (14) angebracht. Zwischen den Ständern (1) können bekanntermaßen Distanzstücke (15) und Diagonalspannverbände (16) mit Spannschrauben (17) angeordnet sein.

Wie aus Figur 2 erkennbar, ist jeder Haken (5) an der die Last (P) auf die Unterkante (26) einer Ausnehmung (3) des Flansches (2) übertragenden Auflagefläche (19) mit einem in Keilform (22) verdickten Hals (23) ausgebildet. Durch diese Keilform werden die Krallenhälse (23) wesentlich stabilisiert, insbesondere wird das Widerstandsmoment gegen Verbiegung erheblich vergrößert. Durch das zwangsläufige Anheben des Hakens (5) bei der Montage des Kragarmes (4), wobei der Haken (5) durch die Ausstanzung (3) des T-Profilständers (1) hindurchgesteckt wird, werden die angreifenden Kräfte, nämlich horizontale Zugkräfte und vertikale Auflagekräfte, sowie durch die Aufladung des Kragarmes verursachte, gemäß Fig. 2 im Uhrzeigersinn wirkende Momente, ohne wesentliche Umlenkungen unmittelbar einerseits über die Auflagefläche (19) und andererseits über die Nase (28) des Hakens (5) auf den T-Profilständer (1) übertragen. Bei der waagerechten Einbringung des Armes (4) in die Ausstanzung (3) des Flansches (2) wird der Haken (5) angehoben, so daß dessen Nase (28) die Oberkante (27) der Ausstanzung (3) überragt, wodurch eine Abscherwirkung der Nase (28) gegenüber dem Arretierelement (20) vermieden wird. Der Kragarm (4) ist mit seiner Oberseite (6) etwa in Höhe der Oberseite (24) des Halses (23) an der Fußplatte (7) angeordnet. Fig. 2 zeigt weiter, daß die Dicke (D) des Halses (23) im Bereich der Auflagefläche (19) um das Maß (e) größer ist, als die Dicke (m) des horizontalen Mittelteils (25) des Hakens (5). Der Haken (5) ist infolge dieser Formgebung in dem am meisten auf Biegung beanspruchten Bereich, z. B. seines Ansatzes an der Fußplatte (7), wesentlich verstärkt.

Wie bereits erwähnt, überragt im eingebauten Zustand die Nase (28) des Hakens (5) die Oberkante (27) der Ausstanzung (3) des Flansches (2) um das Maß (f). Hieraus ergibt sich mit Vorteil u. a. eine verbesserte Handhabung bei der Montage, da der Kragarm (4) beim Einhängen und Hochsetzen bereits vor dem Einlegen des Arretierelementes (20) eine feste Position einnimmt, indem die Nase (28) des Hakens (5) die Innenseite (8) des Flansches (2) hintergreift.

Eine weitere Montageerleichterung ergibt sich dadurch, daß der schräg ansteigende Teil des Keiles (22) in horizontaler Richtung ein Längenmaß (b) aufweist, das etwa der halben Dicke (w) des Flansches (2) entspricht und gleich bzw. um eine Passungstoleranz, z. B. 0,1 und 0,5 mm kleiner als der Abstand der Hakeninnenseite (9) von der Flanschinnenseite (8) ist. Dadurch wird beim Einstecken des Kragarmes (4) zunächst das Vorderteil des Hakens (5) durch die Ausstanzung (3) passend hindurchgesteckt, worauf erst dann, wenn die Hakennase (28) mit ihrer Innenseite (9) bis zur Innenseite (8) des Flansches (2) durchgedrungen ist, der schräg ansteigende Teil des Keiles (22) beim weiteren Duchstecken den Haken (5) anhebt und die in der Figur 2 dargestellte Endposition einnimmt, worauf dann problemlos die Hakennase (28) mit dem hier in etwa u-förmigen Sicherungs- bzw. Arretierelement (20) hinterfüttert und damit gesichert wird.

Gemäß der Darstellung in Figur 3 ist das Sicherungselement (20) beispielsweise mit u-förmig nach unten gerichteten Schenkein ausgebildet, die an ihren Innenseiten am Ende jeweils eine Ausschmiedung aufweisen, um vorteilhaft ein Hochschieben des Sicherungselementes (20) zu verhindern. Zur weiteren Verringerung der Scherwirkung kann der Steg zwischen den Schenkeln des Sicherungselementes (20) im Querschnitt verstärkt profiliert sein.

Mit der erfindungsgemäßen Ausgestaltung des Hakens wird weiterhin erreicht, daß die Auflagefläche (19) des Halses (23) eine horizontale Länge (c) aufweist, die etwa der halben Dicke (w) des Flansches (2) entspricht. Der hiermit gegebene kurze Abstand der Auflagefläche (19) des Hakens (5) von der Fußplatte (7) verringert das durch Lasteinwirkung von (P) und Auskragung des Kragarmes (4) verursachte Moment und erhöht somit die Sicherheit bei Einleitung dieser Kräfte in den T-Profilständer (1).

Weiterhin ist aus der Figur 2 erkennbar, daß das Höhenmaß (H) des Hakens (5), gemessen zwischen dem Mittelteil (25) und der Nase (28), um eine Passungstoleranz, z. B. 0,1 bis 0,5 mm kleiner ist als der Abstand (A) zwischen Unterkante (26) und Oberkante (27) der Ausstanzung (3) des Flansches (2). Ein guter Sitz des Kragarmes (4) am Profilständer (1) wird dadurch erzielt, daß die Dicke (d) des Sicherungselementes (20) etwa dem horizontalen Längenmaß (c) der Auflagefläche (19) entsprechend ausgebildet ist, wobei dessen Ausnehmung (21) das Höhenmaß (W) bei einer Gesamtlänge von (C) aufweist. Dieses Höhenmaß (W) entspricht dem Höhenmaß (H) des Hakens (5) plus einer Passungstoleranz, z. B. 0,1 bis 0,5 mm. Hierdurch werden Passungsungenauigkeiten vermieden, die zu einem unstabilen Aufbau führen könnten.

Das erfindungsgemäße Regal läßt sich infolge der geschilderten Vorteile mit geringstmöglichem Aufwand an Montagearbeit aufbauen bzw. verändern und somit auf einfachste Weise an unterschiedliches Layout anpassen. Auch kann die Montage oder Demontage von ungeschultem Personal ohne besondere Anweisungen durchgeführt werden, da die hierfür erforderlichen Arbeitsschritte aus den Konstruktionsmerkmalen der Funktionsglieder ohne weiteres ersichtlich ist.

Die erfindungsgemäße Augestaltung der Kragarme (4) ist nicht nur auf das in den Zeichnungsfiguren dargestellte Ausführungsbeispiel beschränkt. So können beispielsweise, ohne den Rahmen der Erfindung zu verlassen, die Haken (5) als Gesenkschmiedeteile ausgebildet und vergütet und mit den Fußplatten (7) durch hochfeste Schweißnähte verbunden sein. Auch könnten die Sicherungselemente (20) beliebig profiliert ausgebildet sein, beispielsweise die Form des griechischen Buchstabens Omegas haben oder als geschlossener Ring ausgebildet sein. Ferner können zur Bildung der äußeren Form Profile beliebiger Art Verwendung finden bzw. die Sicherungselemente auch als Gieß- und/oder Schmiedeprodukte hergestellt werden. Die jeweilige konstruktive Ausgestaltung ist in Anpassung an die spezielle Verwendung dem Fachmann anheimgestellt.

Insgesamt stellt die Ausgestaltung der Kragarme und ihrer Befestigungselemente einen Fortschritt dar, welcher sich durch ein Optimum an Sicherheit und Montagefreundlichkeit vom Stand der Technik vorteilhaft unterscheidet. Insofern erfüllt die Erfindung in idealer Weise die eingangs gestellte Aufgabe.

## Patentansprüche

1. Kragarmregal für Langgutprodukte wie Bretter, Rohre, Profileisen und dergl., mit Ständern (1) und sich von diesen aus erstreckenden Kragarmen (4), wobei in den Ständern Ausstanzungen (3) und an den Kragarmen zwei L-förmig nach oben gebogene, sich über die Oberseite des Kragarmes hinaus erstreckende Haken (5) zum lösbaren Einhängen in die Ausstanzungen vorgesehen sind und zwischen Kragarm und Haken eine Fußplatte (7) befestigt ist, wobei die Ständer als T-Profilständer ausgebildet sind und in den Flanschen der T-Profilständer die Ausstanzungen paarweise im Abstand voneinander in gleicher Höhe sowie übereinander angeordnet sind und in die Ausstanzungen die Haken horizontal einbringbar und mittels Sicherungselementen (20) arretierbar sind, dadurch gekennzeichnet, daß jeder Haken (5) einen teilweise nach unten verdickten Hals (23) aufweist, dessen Unterseite eine Auflagefläche (19) in einem Teilbereich der Unterkante (26) der Ausstanzung (3) bildet.

2. Kragarmregal nach Anspruch 1, **dadurch gekennzeichnet**, daß die Auflagefläche (19) in einer keilförmigen Abschrägung (22) zum horizontalen und verjüngten Mittelteil (25) des Hakens (5) endet.

3. Kragarmregal nach Anspruch 1 oder 2, **dadurch gekennzeichnet**, daß der Kragarm (4) mit seiner Oberseite (6) etwa in der Höhe der Oberseite (24) des Halses (23) an der Fußplatte (7) angeordnet ist.

4. Kragarm nach einem oder mehreren der Ansprüche 1 bis 3, **dadurch gekennzeichnet**, daß die Dicke (D) des Halses (23) im Bereich der Auflagefläche (19) um das Maß (e) größer ist, als die Dicke (m) vom horizontalen Mittelteil (25) des Hakens (5).

5. Kragarmregal nach einem oder mehreren der Ansprüche 1 bis 4, **dadurch gekennzeichnet**, daß die Nase (28) des Hakens (5) um das Maß (f) im eingebauten Zustand die Oberkante (27) der Ausstanzung (3) des Flansches (2) üerragt.

6. Kragarmregal nach einm oder mehreren der Ansprüche 1 bis 5, **dadurch gekennzeichnet**, daß der schräg ansteigende Teil des Keiles (22) in horizontaler Richtung eine Länge (b) besitzt, die etwa der halben Dicke (w) des Flansches (2) entspricht und gleich bzw. um eine Passungstoleranz, vorzugsweise zwischen 0,1 und 0,5 mm kleiner als der Abstand der Hakeninnenseite (9) von der Flanschinnenseite (8) ist.

7. Kragarmregal nach einem oder mehreren der Ansprüche 1 bis 6, **dadurch gekennzeichnet**, daß die Auflagefläche (19) des Halses (23) eine horizontale Länge (c) aufweist, die etwa der halben Dicke (w) des Flansches (2) entspricht.

8. Kragarmregal nach einem oder mehreren der Ansprüche 1 bis 7, **dadurch gekennzeichnet**, daß das Höhenmaß (H) des Hakens, gemessen zwischen dem Mittelteil (25) und der Nase (28), um eine Passungstoleranz, vorzugsweise 0,1 bis 0,5 mm, kleiner ist, als der Abstand (A) zwischen Unterkante (26) und Oberkante (27) der Ausstanzungen (3) des Flansches (2).

9. Kragarmregal nach einem oder mehreren der Ansprüche 1 bis 8, **dadurch gekennzeichnet**, daß die Dicke (d) des Sicherungselementes (20) etwa dem horizontalen Längenmaß (c) der Auflagefläche (19) entspricht und dessen Ausnehmung (21) ein Höhenmaß (W) aufweist, das dem Höhenmaß (H) des Hakens (5) plus einer Passungstoleranz von vorzugsweise 0,1 bis 0,5 mm entspricht.

## Claims

1. Cantilever shelf system for long products such a boards, pipes, structural iron sections and similar, with uprights (1) and cantilevers (4) extending from these, wherein punched slots (3) are provided in the uprights and two upwardly curved, L-shaped hooks (5) extending beyond the upper side of the cantilever are provided on the cantilevers to detachably insert them into the punched slots, and a foot plate (7) is fastened between the cantilever and the hooks, wherein the uprights are constructed in the form of T-section uprights, and the punched slots are arranged in pairs one above the other and spaced from one another on the same level in the flanges of the T-section uprights, and the hooks may be inserted horizontally into the punched slots and may be secured by means of locking elements (20), characterised in that each hook (5) has a neck (23) partially thickened downwards, its underside forming a bearing surface (19) in a section of the lower edge (26) of the punched slot (3).

2. Cantilever shelf system according to Claim 1, characterised in that the bearing surface (19) terminates in a wedge-shaped section (22) inclined in relation to the horizontal and tapered central section (25) of the hook (5).

3. Cantilever shelf system according to Claim 1 or 2, characterised in that the cantilever (4) is arranged on the foot plate (7) with its upper side (6) approximately on the same level as the upper side (24) of the neck section (23).

4. Cantilever according to one or more of Claims 1 to 3, characterised in that the thickness (D) of the neck (23) in the vicinity of the bearing surface (19) is greater by a dimension (e) than the thickness (m) of the horizontal central section (25) of the hook (5).

5. Cantilever shelf system according to one or more of Claims 1 to 4, characterised in that the nose (28) of the hook (5) protrudes over the upper edge (27) of the punched slot (3) in the flange (2) by the dimension (f) when installed.

6. Cantilever shelf system according to one or more of Claims 1 to 5, characterised in that the horizontal length (b) of the upwardly inclined section of the wedge (22) corresponds approximately to half the thickness (w) of the flange (2) and is equal to or smaller by a fit tolerance of preferably between 0.1 and 0.5 mm than the distance of the inside (9) of the hook from the inside (8) of the flange.

7. Cantilever shelf system according to one or more of Claims 1 to 6, characterised in that the horizontal length (c) of the bearing surface (19) of the neck (23) corresponds approximately to half the thickness (w) of the flange (2).

8. Cantilever shelf system according to one or more of Claims 1 to 7, characterised in that the height dimension (H) of the hook, measured between the central section (25) and the nose (28), is smaller by a fit tolerance of preferably 0.1 to 0.5 mm than the distance (A) between the lower edge (26) and upper edge (27) of the punched slots (3) in the flange (2).

9. Cantilever shelf system according to one or more of Claims 1 to 8, characterised in that the thickness (d) of the locking element (20) corresponds approximately to the horizontal length dimension (c) of the bearing surface (19), and its recess (21) has a height dimension (W) corresponding to the height dimension (H) of the hook (5) plus a fit tolerance of preferably 0.1 to 0.5 mm.

## Revendications

1. Rayonnage à consoles pour des produits en longueur, tels que des planches, des tubes, des fers profilés et analogues, avec des montants (1) et des consoles (4) s'étendant à partir de ceux-ci, dans lequel des matriçages (3) sont prévus dans les montants et des crochets (5) repliés vers le haut en forme de L sur les consoles, s'étendant à partir de la face supérieure de la console pour permettre un accrochage détachable dans les matriçages et une plaque d'appui (7) est fixée entre la console et le crochet, les montants étant constitués comme des montants profilés à section en forme de T et les matriçages étant disposés dans les ailes des montants profilés à section en T par paires à une certaine distance les uns des autres à la même hauteur ainsi que les uns au-dessus des autres et dans lequel l'on peut mettre horizontalement les crochets dans les matriçages et les bloquer au moyen d'éléments de fixation (20), rayonnage à consoles caractérisé en ce que chaque crochet (5) présente un col (23) dont l'épaisseur s'accroît en partie vers le bas et dont la face inférieure forme une surface d'appui (19) dans une partie de la zone du bord inférieur (26) du matriçage (3).

2. Rayonnage à consoles selon la revendication 1, caractérisé en ce que la surface d'appui (19) se termine par un biseau (22) en forme de coin en direction de la partie médiane horizontale et qui va en se rétrécissant (23) du crochet (5).

3. Rayonnage à consoles selon la revendication 1 ou 2, caractérisé en ce que la console (4) est disposée avec sa face supérieure (6) à peut près à la hauteur de la face supérieure (24) du col (23) sur la plaque d'appui (7).

4. Rayonnage à consoles selon une ou plusieurs des revendications 1 à 3, caractérisé en ce que l'épaisseur (D) du col (23) dans la zone de la surface d'appui (19) est supérieure d'une quantité (e) à l'épaisseur (m) de la partie médiane horizontale (25) du crochet (5).

5. Rayonnage à consoles selon une ou plusieurs des revendications 1 à 4, caractérisé en ce que le nez (28) du crochet (5) dépasse d'une quantité (f) en position montée le bord supérieur (27) du matriçage (3) de l'aile (2).

6. Rayonnage à consoles selon une ou plusieurs des revendications 1 à 5, caractérisé en ce que la partie obliquement ascendante du coin (22) possède dans le sens horizontal une longueur (b) qui correspond à peu près à la moitié de l'épaisseur (W) de l'aile (2) et est égale à la distance entre la face intérieure du crochet (9) et la face intérieure de l'aile (8) ou est inférieure d'un jeu de montage, de préférence compris entre 0,1 et 0,5 mm.

7. Rayonnage à consoles selon une ou plusieurs des revendications 1 à 6, caractérisé en ce que la surface d'appui (19) du col (23) présente une longueur horizontale (c), qui correspond à peu près à la moitié de l'épaisseur (W) de l'aile (2).

8. Rayonnage à consoles selon une ou plusieurs des revendications 1 à 7, caractérisé en ce que la mesure en hauteur (H) du crochet, mesurée entre la partie médiane (25) et le nez (28) est inférieure d'un jeu de montage de préférence compris entre 0,1 et 0,5 mm à la distance (A) comprise entre le bord inférieur (26) et le bord supérieur (27) des matriçages (3) de l'aile (2).

9. Rayonnage à consoles selon une ou plusieurs des revendications 1 à 8, caractérisé en ce que l'épaisseur (d) de l'élément de fixation (20) correspond à peu près à la mesure horizontale de la longueur de la surface d'appui (19) et en ce que son évidement (21) présente une mesure en hauteur (W) qui correspond à la mesure en hauteur (H) du crochet (5) plus un jeu de montage compris de préférence entre 0,1 et 0,5 mm.
